# EUROPÄISCHE PATENTSCHRIFT

(11) **EP 1 241 758 B1**
(45) Veröffentlichungstag und Bekanntmachung des Hinweises auf die Patenterteilung: **22.09.2004**
(21) Anmeldenummer: 01890330.2
(22) Anmeldetag: 30.11.2001
(51) Int. Cl.: H02G 3/06

(54) **Befestigungsanordnung für Kabel**
Fastening assembly for cable
Dispositif de maintien de cable

(30) Priorität: 13.03.2001 AT 1822001 U
(43) Veröffentlichungstag der Anmeldung: 18.09.2002
(73) Patentinhaber: Gatterbauer, Rupert, Jun., 5270 Mauerkirchen (AT)
(72) Erfinder: Gatterbauer, Rupert, Jun., 5270 Mauerkirchen (AT)
(74) Vertreter: Hübscher, Helmut, Dipl.-Ing.

(56) Entgegenhaltungen:
- WO-A-00/67052
- US-A- 4 534 147

## Beschreibung

Die Erfindung bezieht sich auf eine Befestigungsanordnung für Kabel, bestehend aus einem Halterungsprofil mit rinnenförmigen Klemm- oder Einlegehalterungen für jedes Kabel und einem das Halterungsprofil zu einem geschlossenen Hohlkörper in Form einer Leiste ergänzenden, aufschnappbaren Abdeckprofil.

Derartige Befestigungsanordnungen werden für die nachträgliche Verlegung von Kabeln und auch dann verwendet, wenn die Wahrscheinlichkeit besteht, daß bestehende Kabelverbindungen ausgewechselt oder durch weitere Kabel ergänzt werden sollen, wie dies im Zuge der immer stärker werdenden Vernetzung von Kommunikationseinrichtungen in Büros, aber auch bei sonstigen Anwendungen der Fall ist. Die Befestigungsanordnung kann durch verschiedene Profilformen, insbesondere des Abdeckprofiles die Gestalt einer Zier- oder Sesselleiste erhalten und auch in der Einfärbung bzw. Oberflächenstruktur an den jeweiligen Raum angepaßt werden.

Bekannte Befestigungsanordnungen dieser wie zum Beispiel im Dokument US-A-4 534 147 Art benützen als Halteprofil ein einfaches Rinnenprofil, das die Klemm- oder Einlegehalterungen einteilig angeformt hat und ein im wesentlichen nur einen Deckel bildendes Abdeckprofil, das mit beiden Rändern aufgeschnappt ist und bei Änderungen in der Leitungsführung zur Gänze abgenommen werden muß. Im Bereich von Raumekken oder sonstigen stärkeren Umleitungen in der Gesamtführung der Befestigungsanordnung werden die Halterungsprofile bis an das Eck herangeführt und die an den aufschnappbaren Abdeckprofilen entstehende Eckfuge wird durch eine zusätzliche Eckabdeckung geschützt. Nachteilig ist hier, daß im Eckbereich keine ordnungsgemäße Abstützung für das bzw. die Kabel gegeben ist und insbesondere die Gefahr besteht, daß empfindlichere Kabel an der Ecke geknickt werden. Ein Nachziehen solcher geknickter Kabel ist praktisch unmöglich.

Aufgabe der Erfindung ist es, hier Abhilfe zu schaffen und eine an verschiedene Aufgaben anpaßbare Befestigungsanordnung anzugeben, bei der sowohl ein ausreichender Schutz der verlegten Kabel gewährleistet ist, Kabelbeschädigungen im Bereich von Ecken vermieden werden, als auch nachträgliche Ergänzungen und Änderungen in der Kabelführung erleichtert werden.

Die gestellte Aufgabe wird dadurch gelöst, daß das Abdeckprofil an seinem einen Rand mit einer angepaßten Aufnahme unter Bildung einer Schwenkverbindung in eine runde Endverdickung eines vorstehenden Randflansches des Halterungsprofiles einhängbar und in der Schließstellung im anderen Randbereich über federnde Rastschenkel der Schnapphalterung am Halterungsprofil befestigbar ist, und daß bei einer um Ecken führenden Befestigungsanordnung an die bis zu den Eckbereichen herangeführten Halterungsprofile Eckprofile anschließbar, insbesondere ansteckbar sind, bei welchen die Einlegehalterungen im Bogen um die Ecke führen und für die eigene, an die Abdeckprofile anschließende Eckabdeckungen vorgesehen sind.

Bei der erfindungsgemäßen Ausführung kann das Abdeckprofil im Bedarfsfall nur auf- bzw. abgeklappt werden, so daß sowohl das Öffnen der Befestigungsanordnung erleichtert wird als auch bei einem nachträglichen Schließen des Abdeckprofiles keine zusätzlichen Arbeiten für eine Längsausrichtung gegenüber dem Halterungsprofil anfallen. Ganz entscheidend bei der erfindungsgemäßen Ausführung ist aber, daß erstmalig auch im Eckbereich eine die Kabel schonende Umlenkung im weichen Bogen und unter vollständiger Kabelabstützung über ihre ganze Länge ermöglicht wird.

Konstruktiv besteht eine bevorzugte Ausgestaltung darin, daß der die runde Endverdickung aufweisende Randflansch des Halterungsprofiles von einem unteren Profilschenkel des Halterungsprofiles nach oben ragt, mit Radialabstand von der Endverdickung ein im Querschnitt bogenförmiger federnder Bremssteg am Halterungsprofil vorgesehen ist, und das mit einer halbrunden Endsicke unter Bildung der Schwenkverbindung auf die Endverdickung aufsetzbare Abdeckprofil in der Einhängestellung mit einem Randvorsprung gegen diesen Bremssteg drückt. Durch diesen Bremssteg wird auch eine spielfreie Halterung des geschlossenen Abdeckprofiles im Scharnierbereich erzielt.

Das Aufstecken und Schließen des Abdeckprofiles wird erleichtert, wenn der mit der Schnapphalterung versehene Rand des Abdeckprofiles zu einer Griffleiste geformt ist.

Nach einer Weiterbildung sind zwischen wenigstens zwei Klemm- bzw. Einlegehalterungen Trennstege zur Abschirmung eines in die eine Halterung eingelegten Stromkabels gegenüber einem Schwachstromkabel oder einem für die Kommunikation bzw. Daten- oder Signalübertragung dienenden Kabel in der anderen Halterung vorgesehen. Damit wird auch einer zwingenden Forderungen entsprochen, die eine eindeutige Trennung zwischen Starkstrom und Kommunikationsbereich in der Kabelführung vorsieht. Damit solche Trennstege nur im Bedarfsfall eingesetzt werden, kann man sie mit Schnapphalterungen als gesonderte Teile zwischen zwei Klemmhalterungen des Halterungsprofiles einlegen, was aber eine zusätzliche Arbeit notwendig macht. Vorteilhaft sind daher die Trennstege der Abschirmung am Abdeckprofil selbst angebracht. Es ist sowohl eine nachträgliche Anbringung als auch die Verwendung von bereits mit Trennstegen ausgestatteten Abdeckprofilen möglich.

Besonders dann, wenn eine fertig montierte Befestigungsanordnung voll besetzt ist und trotzdem weitere Kabel vorgesehen werden müssen, kann erfindungsgemäß ein zusätzlicher Kabelträger vorgesehen werden, der einen auf die Außenränder der äußeren Kabelhalterungen des Halterungsprofiles aufschnappbaren Träger mit zusätzlichen Kabelhalterungen aufweist, wobei ein an die vergrößerte Dicke des entstehenden Hohlkörpers angepaßtes Abdeckprofil und in den Ecken entsprechende, mit Bogenführungen ausgestattete Halterungsprofile und Eckabdeckungen vorgesehen sind. Hier kann das ursprüngliche Halterungsprofil im Bedarfsfall montiert bleiben.

Weitere Vorteile des Erfindungsgegenstandes entnimmt man der nachfolgenden Zeichnungsbeschreibung. In der Zeichnung ist der Erfindungsgegenstand beispielsweise dargestellt. Es zeigen
- Fig. 1: bis 3 eine erfindungsgemäße Befestigungsanordnung im Querschnitt und in verschiedenen Stellungen des Abdeckprofiles,
- Fig. 4: die Befestigungsanordnung im Bereich einer Innenecke,
- Fig. 5: einen Schnitt nach der Linie V-V der Fig. 4,
- Fig. 6: eine Befestigungsanordnung im Bereich einer Außenecke,
- Fig. 7: einen Schnitt nach der Linie VII-VII der Fig. 6 und die
- Fig. 8: bis 10 verschiedene Befestigungsanordnungen in der Montagestellung im Querschnitt.

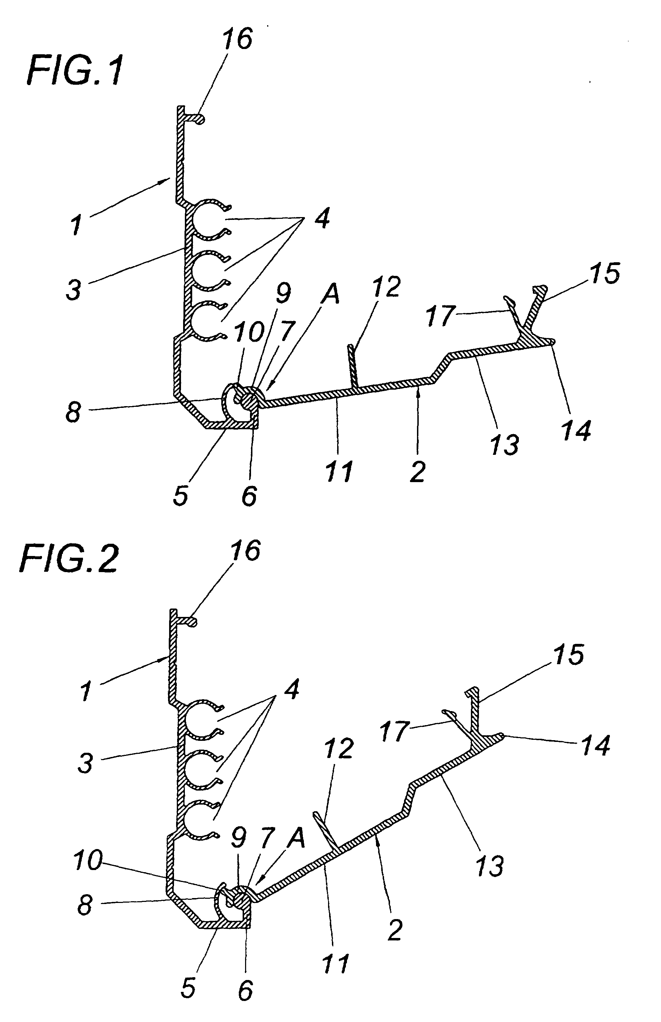

Nach den Fig. 1 bis 7 besitzt die Befestigungsanordnung ein Halterungsprofil 1 und ein Abdeckprofil 2. Das Halterungsprofil 1 hat in der Grundform einen L-förmigen Querschnitt, wobei der längere Schenkel im Mittelbereich 3 vorspringend abgesetzt ist und rinnenförmige und federnde Klemmhalterungen 4 für das Einlegen je eines Kabels aufweist. Der untere, kürzere Schenkel 5 trägt am Ende einen hochstehenden Flansch 6 mit einer runden Endverdickung 7 und im Abstand von dieser runden Endverdickung einen federnden Steg 8.

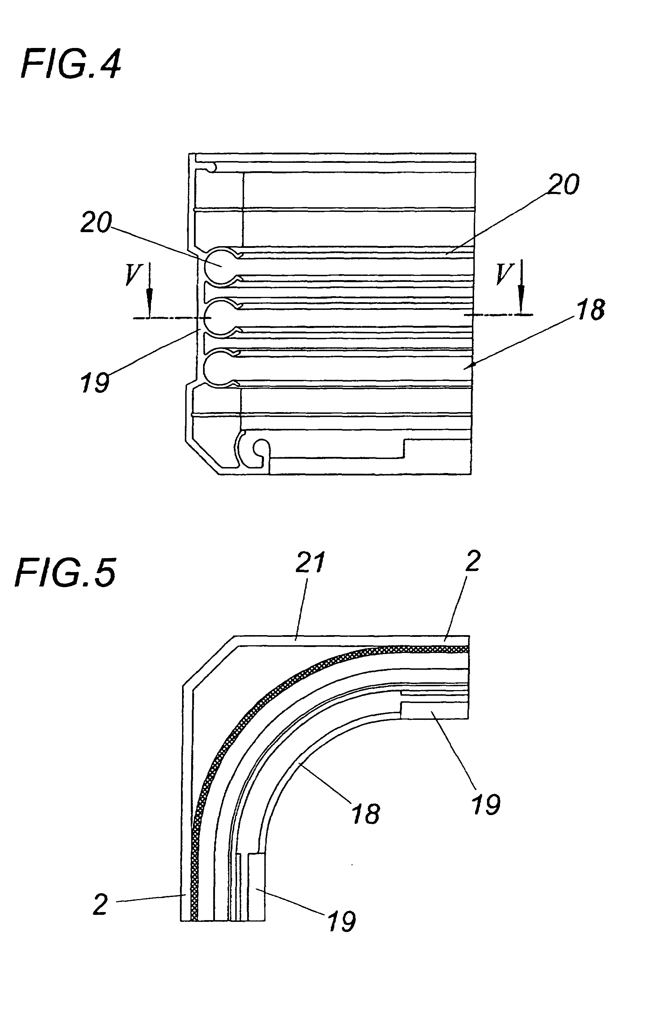

Das Abdeckprofil 2 trägt am unteren Rand eine halbrunde Endsicke 9 und von dieser vorstehend einen für den Eingriff in den Steg 8 bestimmten Randvorsprung 10. Wie die Fig. 1 bis 3 zeigen, drückt der Randvorsprung 10 nach dem Einhängen der Endsicke 9 in die Verdickung 7 bereits beim leichten Hochschwenken des Abdeckprofiles 2 gegen den nun als Bremse wirkenden Steg 8. Im Mittelbereich 11 ragt vom Abdeckprofil ein Abschirmsteg 12 vor, der, wie Fig. 3 zeigt, zwischen zwei Klemmhalterungen 4 einrastet. Vom Mittelbereich 11 an springt das Abdeckprofil 2 in den Bereich 13 zurück, der am Ende zu einer Griffleiste 14 und einem Abdeckschenkel 15 geformt ist, der einen Randsteg 16 des Profiles 1 übergreift, wobei ein federnder Rastschenkel 17 unter Bildung einer Schnapphalterung ein verdicktes Ende des Randsteges 16 untergreift.

Nach den Fig. 4 und 5 sind für den Eckbereich gesondert befestigbare Eckprofile 18 vorgesehen, an die Anschlußstücke 19 zur Steckverbindung mit Profilen 1 anschließen. Diese Eckprofile 18 besitzen in der Profilform den Teilen 4 entsprechende Einlegehalterungen 20 für die einzelnen Kabel. Außen ist im Anschluß an Abdeckprofile 2 eine Eckabdeckung 21 vorhanden.

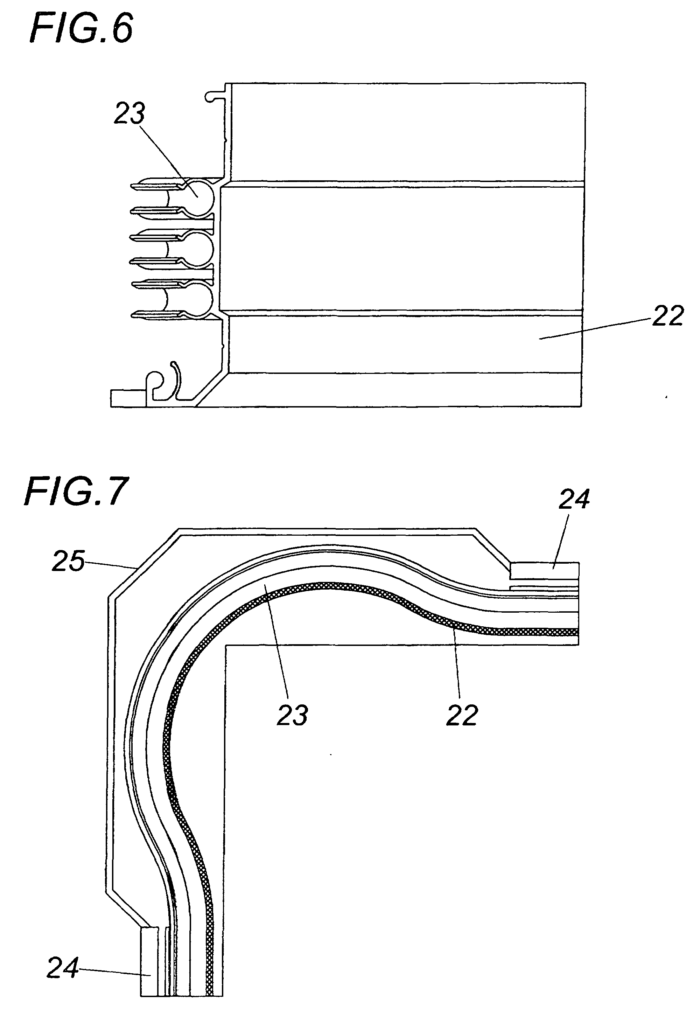

Bei einer Außenecke gemäß den Fig. 6 und 7 sind wieder ein entsprechendes Eckprofil 22 mit nun im weichen Bogen um die Ecke führenden Kabelhalterungen 23 mit Anschlußbereichen 24 für die Halterungsprofile und eine angepaßte Eckabdeckung 25 vorhanden.

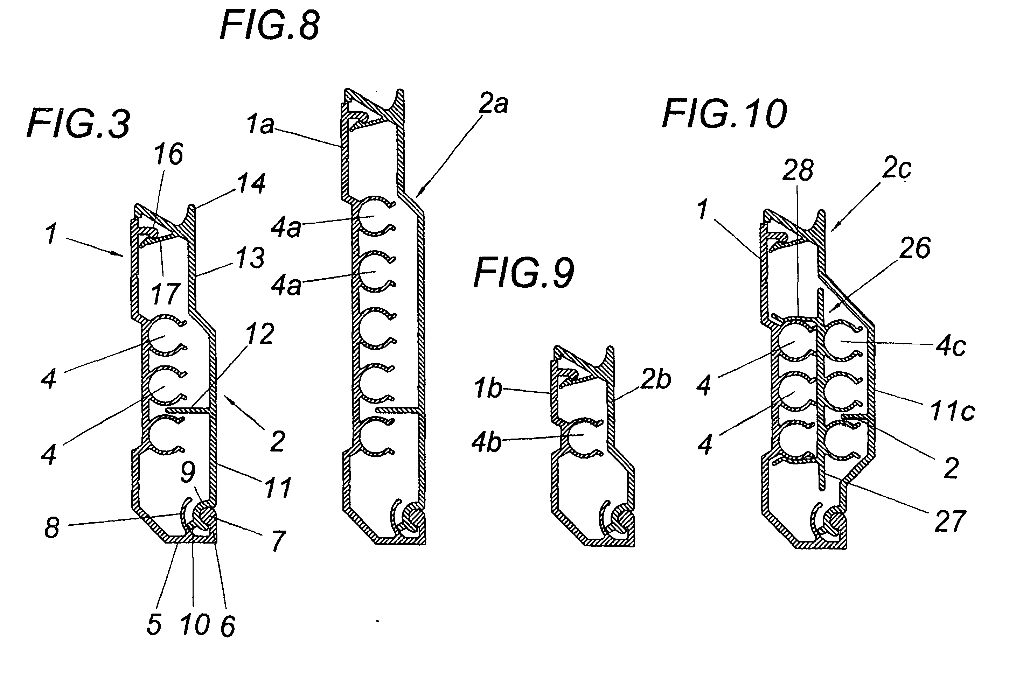

Die Befestigungsanordnungen nach den Fig. 8 und 9 unterscheiden sich von der bisher geschilderten Befestigungsanordnung nur durch die Anzahl der Einlegehalterungen 4a, 4b und die dadurch bedingte unterschiedliche Größe der Halterungsprofile 1a, 1b bzw. der Abdeckprofile 2a, 2b.

Schließlich ist bei der Ausführung nach Fig. 10 ein Halterungsprofil 1 nach den Fig. 1 bis 3 vorhanden, doch wird zusätzlich ein Kabelträger 26 verwendet, der einen Tragkörper 27 besitzt, welcher auf die Außenränder der Halterungen 4 aufschnappbare Halteschenkel 28 aufweist und an der von den Halterungen 4 abweisenden Seite selbst mit Einlegehalterungen 4c versehen ist. Deshalb wird ein Abdeckprofil 2c verwendet, das in seinem Mittelbereich 11 c entsprechend weiter vorspringt.

## Patentansprüche

1. Befestigungsanordnung für Kabel, bestehend aus Halterungsprofilen und Eckprofile (1, 18, 22) mit rinnenförmigen Klemm- oder Einlegehalterungen (4, 20, 23) für jedes Kabel und einem das Halterungsprofil (1) zu einem geschlossenen Hohlkörper in Form einer Leiste ergänzenden, aufschnappbaren Abdeckprofil (2), **dadurch gekennzeichnet, daß** das Abdeckprofil (2, 2a - 2c) an seinem einen Rand mit einer angepaßten Aufnahme (A) unter Bildung einer Schwenkverbindung in eine runde Endverdickung (7) eines vorstehenden Randflansches (6) des Halterungsprofiles (1 - 1b) einhängbar und in der Schließstellung im anderen Randbereich über federnde Rastschenkel (16, 17) der Schnapphalterung am Halterungsprofil (1 - 1b) befestigbar ist, und daß bei einer um Ecken führenden Befestigungsanordnung an die bis zu den Eckbereichen herangeführten Halterungsprofile (1) Eckprofile (18, 22) anschließbar, insbesondere ansteckbar sind, bei welchen die Einlegehalterungen (20, 23) im Bogen um die Ecke führen und für die eigene, an die Abdeckprofile anschließende Eckabdeckungen (21, 25) vorgesehen sind.

2. Befestigungsanordnung nach Anspruch 1, **dadurch gekennzeichnet, daß** der die runde Endverdickung (7) aufweisende Randflansch (6) des Halterungsprofiles (1) von einem unteren Profilschenkel (5) des Halterungsprofiles nach oben ragt, mit Radialabstand von der Endverdickung (7) ein im Querschnitt bogenförmiger federnder Bremssteg (8) am Halterungsprofil (1) vorgesehen ist, und das mit einer halbrunden Endsicke (9) unter Bildung der Schwenkverbindung auf die Endverdickung (7) aufsetzbare Abdeckprofil (2) in der Einhängestellung mit einem Randvorsprung (10) gegen diesen Bremssteg (8) drückt.

3. Befestigungsanordnung nach Anspruch 1 oder 2, **dadurch gekennzeichnet, daß** der mit der Schnapphalterung (17) versehene Rand des Abdeckprofiles (2) zu einer Griffleiste (14) geformt ist.

4. Befestigungsanordnung nach einem der Ansprüche 1 bis 3, **dadurch gekennzeichnet, daß** zwischen wenigstens zwei Klemm- bzw. Einlegehalterungen (4) Trennstege (12) zur Abschirmung eines in die eine Halterung eingelegten Stromkabels gegenüber einem Schwachstromkabel oder einem für die Kommunikation bzw. Daten- oder Signalübertragung dienenden Kabel in der anderen Halterung vorgesehen sind.

5. Befestigungsanordnung nach Anspruch 4, **dadurch gekennzeichnet, daß** der bzw. die Trennstege (12) der Abschirmung am Abdeckprofil (2) angebracht sind.

6. Befestigungsanordnung nach einem der Ansprüche 1 bis 5, **dadurch gekennzeichnet, daß** ein zusätzlicher Kabelträger (26) vorgesehen ist, der einen auf die Außenränder der äußeren Kabelhalterungen (4) des Halterungsprofiles aufschnappbaren Träger (27) mit zusätzlichen Kabelhalterungen (4c) aufweist, wobei ein an die vergrößerte Dicke des entstehenden Hohlkörpers angepaßtes Abdeckprofil (11c) und in den Ecken entsprechende, mit Bogenführungen ausgestattete Halterungsprofile und Eckabdeckungen vorgesehen sind.

## Claims

1. A fixing arrangement for cables, consisting of mounting profiles and corner profiles (1, 18, 22), with channel-shaped clamping or insertion mountings (4, 20, 23) for each cable and a snap-on cover profile (2) which complements the mounting profile (1) to form a closed hollow member in the form of a ledge, **characterised in that** the cover profile (2, 2a - 2c) is adapted to be engaged, at its one edge, in a round end thickening (7) of a projecting edge flange (6) of the mounting profile (1 - 1b), by an adapted holder (A), with the formation of a pivotal connection, and in the closed position is fixable in the other edge zone via resilient catch limbs (16, 17) of the snap mounting on the mounting profile (1 1b), and **in that** in the case of a fixing arrangement extending around corners corner profiles (18, 22) can be connected, more particularly pushed on, to the mounting profiles (1) extending as far as the corner zones, in which corner profiles the insertion mountings (20, 23) extend in an arc around the corner and are provided for the individual corner coverings (21, 25) adjoining the cover profiles.

2. A fixing arrangement according to claim 1, **characterised in that** the edge flange (6) of the mounting profile (1) having the round end thickening (7) projects upwardly from a bottom limb (5) of the mounting profile, a resilient brake web (8) of arcuate cross-section is provided on the mounting profile (1) with radial spacing from the end thickening (7) and the cover profile (2), which can be mounted with a semi-circular end corrugation (9) on to the end thickening (7) so as to form the pivotal connection presses against said brake web (8) by an edge projection (10) in the engaged position.

3. A fixing arrangement according to claim 1 or 2, **characterised in that** the edge of the cover profile (2) provided with the snap mounting (17) is formed into a grip ledge (14).

4. A fixing arrangement according to any one of claims 1 to 3, **characterised in that** separating webs (12) are provided between at least two clamping or insertion mountings (4) to shield a current cable inserted in one mounting from a weak-current cable or a cable serving for communication or data or signal transmission in the other mounting.

5. A fixing arrangement according to claim 4, **characterised in that** the separating web or webs (12) of the shielding are provided on the cover profile (2).

6. A fixing arrangement according to any one of claims 1 to 5, **characterised in that** an additional cable carrier (26) is provided, which comprises a carrier (27) adapted to snap on to the outer edges of the outer cable mountings (4) of the mounting profile and which has additional cable mountings (4c), while a cover profile (11c) adapted to the enlarged thickness of the resulting hollow member is provided and corresponding mounting profiles equipped with arcuate guides and corner covers are provided in the corners.

## Revendications

1. Dispositif de fixation pour des câbles, formé de profilés de maintien et de profilés d'angle (1, 18, 22), comprenant des fixations à serrage ou à insertion (4, 20, 23) en forme de goulottes, pour chaque câble, et un profilé de recouvrement (2), pouvant être rapporté par encliquetage, complétant le profilé de fixation (1) pour former un corps creux fermé ayant la forme d'une bande, **caractérisé en ce que** le profilé de recouvrement (2, 2a - 2c) peut être accroché, sur l'un de ses bords, à un logement (A) adapté, en formant une liaison à pivotement, réalisée dans un épaississement d'extrémité (7) rond d'un rebord de bordure (6) en saillie du profilé de fixation (1 - 1b) et, en position de fermeture, peut être fixé sur le profilé de maintien (1 - 1b) dans l'autre zone de bordure, par l'intermédiaire de branches d'encliquetage (16, 17) élastiques de la fixation à encliquetage, et **en ce que**, dans le cas d'un agencement de fixation passant autour d'angles, aux profilés de fixation (1), amenés jusqu'aux zones d'angles, peuvent être raccordés, en particulier par un montage par enfichage, des profilés d'angle (18, 22), pour lesquels sont prévues les fixations à insertion (20, 23), assurant un guidage dans le coude passant autour de l'angle, et pour les recouvrements d'angles (21, 25) propres, se raccordant aux profilés de recouvrement.

2. Dispositif de fixation selon la revendication 1, **caractérisé en ce que** le rebord de bordure (6), présentant l'épaississement d'extrémité (7) rond, du profilé de fixation (1) fait saillie vers le haut depuis une branche de profilé (5) inférieure du profilé de fixation, une nervure de freinage (8) élastique, à section transversale en forme d'arc, est prévue sur le profilé de fixation (1), avec un espacement radial par rapport à l'épaississement d'extrémité (7), et le profilé de recouvrement (2), pouvant être rapporté sur l'épaississement d'extrémité (7) par une moulure d'extrémité (9) semironde en formant la liaison à pivotement, presse, à la position d'accrochage, par une saillie de bordure (10), contre cette nervure de freinage (8).

3. Dispositif de fixation selon la revendication 1 ou 2, **caractérisé en ce que** le bord, muni de la fixation à encliquetage (17) du profilé de recouvrement (2) est formé en une bande de saisie (14).

4. Dispositif de fixation selon l'une des revendications 1 à 3, **caractérisé en ce que**, entre au moins deux fixations de serrage, respectivement à insertion (4), sont prévues des nervures de séparation (12,) pour l'écrantage ou blindage d'un câble électrique inséré dans une première fixation, par rapport à un câble pour courant faible ou bien un câble servant à la communication, respectivement à la transmission de données ou de signaux, inséré dans l'autre fixation.

5. Dispositif de fixation selon la revendication 4, **caractérisé en ce que** la ou les nervures de séparation (12) de l'écrantage est/sont montée(s) sur le profil de recouvrement (2).

6. Dispositif de fixation selon l'une des revendications 1 à 5, **caractérisé en ce qu'**est prévu un support de câble (26) supplémentaire, présentant un support (27) pouvant être rapporté par encliquetage sur les parois extérieures des fixations pour câble (4) extérieures du profilé de fixation, avec des fixations pour câble (4c) supplémentaires, sachant que sont prévus un profilé de recouvrement (11c), adapté à l'épaisseur augmenté du corps creux créé, et, dans les angles, des profilés de fixation et des recouvrements d'angles correspondants, équipés de guidages arqués.
